# EUROPEAN PATENT APPLICATION

(11) **EP 2 664 768 A2**
(43) Date of publication of application: **20.11.2013**
(21) Application number: 13167441.8
(22) Date of filing: 13.05.2013
(51) Int. Cl.: F02C 9/26

(54) **Systems and methods for minimizing coking in gas turbine engines**

(30) Priority: 15.05.2012 US 201213472086
(71) Applicant: General Electric Company, Schenectady, New York 12345 (US)
(72) Inventor: Rajesh, Prabhakaran Saraswathi, 560066 Bangalore, Karnataka (IN); Chillar, Rahul J, Atlanta, GA Georgia 30339 (US); Saha, Rajarshi, 560066 Bangalore, Karnataka (IN); Antoine, Nicolas, 90007 Franche-Comte (FR)
(74) Representative: Cleary, Fidelma

(57) **Abstract**

Embodiments of the disclosure can provide systems (200) and methods (400) for minimizing coking in gas turbine engines. According to one embodiment, there is disclosed a system (200) for minimizing coking in a gas turbine engine. The system (400) may include a gas turbine compartment (202), a fuel component (206) disposed within the gas turbine compartment (202), and a thermoelectric element (208) disposed at least partially about the fuel component (206). The thermoelectric element (208) may be configured to exchange heat with the fuel component (206).

## Description

### FIELD OF THE DISCLOSURE

Embodiments of the present disclosure relate generally to gas turbine engines, and more particularly to systems and methods for minimizing coking in gas turbine engines.

### BACKGROUND OF THE DISCLOSURE

When a dual fuel gas turbine engine is operating on only one of the dual fuels, the other fuel typically sits stagnant in the fuel lines of the gas turbine compartment. For example, gas turbines typically operate on natural gas fuel, with fuel oil (e.g., no. 2 distillate) often used as a contingency for periods when natural gas fuel is unavailable. When the gas turbine is operating on natural gas fuel, the fuel oil typically remains in liquid fuel lines (e.g., piping, tubing, valves, etc.) leading to the combustor nozzles of the gas turbine engine. The stagnant fuel oil in the liquid fuel lines is often exposed to turbine compartment air temperatures of up to 200°F and turbine surfaces of up to 800°F. Due to the high temperatures in the turbine compartment, the stagnant liquid fuel in the liquid fuel lines begins to vaporize and/or coke forming a gummy substance of hydrocarbons. As a result, the liquid fuel lines may plug up with coke, and the associated components of the liquid fuel lines, such as check valves, three-way valves, and fuel nozzles, may also plug up with coke. For example, in some instances, small particles of coke can break free and clog the fuel nozzles. In other instances, the stagnant fuel may evaporate. In this manner, if air leaks into the system, the evaporated fuel can auto ignite within the fuel lines in the gas turbine compartment.

Past solutions have included recirculation systems to keep the liquid fuel moving, purging systems to remove the liquid fuel, and periodic drainage of the liquid fuel lines. For example, prior attempts have been made to direct the flow of turbine compartment cooling air to the areas subject to coking, but sufficient temperature cooling could not be obtained. Typically, a combustor in the turbine operates at a temperature well over 2000°F. The heat from the combustor radiates towards compartments, such as the fuel, oil, piping and valves, and sits in the turbine enclosure. Even with attempts to ventilate the enclosure, including directing cooling air toward components subject to coking, air temperatures of 300°F around such components is typical. There remains a need, therefore, for an efficient manner of cooling fuel components, particularly gas turbine three-way purge valves, and the stagnant fuel therein that is subjected to high heat by the combustor in the gas turbine compartment.

### BRIEF DESCRIPTION OF THE DISCLOSURE

Some or all of the above needs and/or problems may be addressed by certain embodiments of the present disclosure. Disclosed embodiments may include systems and methods for minimizing coking in gas turbine engines. According to one embodiment, there is disclosed a system for minimizing coking in a gas turbine engine. The system may include a gas turbine compartment, a fuel component disposed within the gas turbine compartment, and a thermoelectric element disposed at least partially about the fuel component. The thermoelectric element may be configured to exchange heat with the fuel component.

According to another embodiment, there is disclosed a system for minimizing coking in a gas turbine engine. The system may include a gas turbine compartment, one or more gas turbine components disposed within the gas turbine compartment, and one or more fuel components disposed within the gas turbine compartment. The one or more fuel components may be in communication with the one or more gas turbine components. The system may also include one or more thermoelectric elements disposed at least partially about the one or more fuel components within the gas turbine compartment. Moreover, the system may include a controller in communication with the one or more thermoelectric elements. The controller may be operable to control heat transfer between the one or more thermoelectric elements and the one or more fuel components.

Further, according to another embodiment, there is disclosed a method for minimizing coking in a gas turbine engine. The gas turbine engine may include a gas turbine compartment and one or more fuel components disposed within the gas turbine compartment. The method may include positioning one or more thermoelectric elements at least partially about the one or more fuel components and cooling the one or more fuel components with the one or more thermoelectric elements.

Other embodiments, aspects, and features of the invention will become apparent to those skilled in the art from the following detailed description, the accompanying drawings, and the appended claims.

### BRIEF DESCRIPTION OF THE DRAWINGS

Reference will now be made to the accompanying drawings, which are not necessarily drawn to scale, and wherein:
FIG. 1 is a schematic illustrating an example gas turbine engine with a compressor, a combustor, and a turbine, according to an embodiment.
FIG. 2 is a schematic illustrating details of an example system for minimizing coking in a gas turbine engine, according to an embodiment.
FIG. 3 is a schematic illustrating details of an example thermoelectric element, according to an embodiment.
FIG. 4 is a flow diagram illustrating details of an example method for minimizing coking in a gas turbine engine, according to an embodiment.

### DETAILED DESCRIPTION OF THE DISCLOSURE

Illustrative embodiments will now be described more fully hereinafter with reference to the accompanying drawings, in which some, but not all embodiments are shown. The present application may be embodied in many different forms and should not be construed as limited to the embodiments set forth herein; rather, these embodiments are provided so that this disclosure will satisfy applicable legal requirements. Like numbers refer to like elements throughout.

Illustrative embodiments are directed to, among other things, systems and methods for preventing and/or minimizing coking in gas turbine engines. In one embodiment, a thermoelectric element may be disposed at least partially about a fuel component (e.g., a fuel pipe or valve) within a gas turbine compartment. In some instances, the thermoelectric element may form a jacket at least partially about the fuel component. In this manner, the fuel component may be cooled or heated by the thermoelectric element so as to prevent and/or minimize coking from a stagnant fuel within the fuel component.

In certain embodiments, the thermoelectric element may include a Peltier element disposed between a cold sink and a heat sink. A voltage may be applied to the Peltier element to control heat transfer between the cold sink and the heat sink. In this manner, the cold sink and the heat sink may be dependent on the polarity of the applied voltage to the Peltier element. In other embodiments, the thermoelectric element may be in communication with a ventilation system. The ventilation system may form part of the gas turbine compartment and may facilitate the dissipation of heat transferred between the thermoelectric element and the fuel component. In still other embodiments, a controller may be in communication with the thermoelectric element. The controller may be operable to control heat transfer between the thermoelectric element and the fuel component.

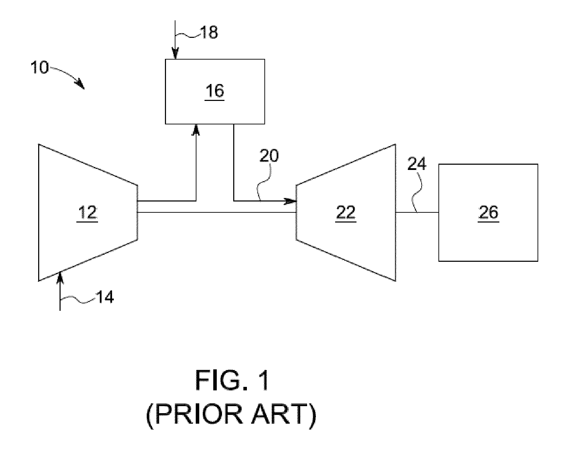

FIG. 1 shows a schematic diagram of an example gas turbine engine 10 as may be used herein. As is known, the gas turbine engine 10 may include a compressor 12. The compressor 12 may compress an incoming flow of air 14. The compressor 12 may deliver the compressed flow of air 14 to a combustor 16. The combustor 16 may mix the compressed flow of air 14 with a pressurized flow of fuel 18 and may ignite the mixture to create a flow of combustion gases 20. Although only a single combustor 16 is shown, the gas turbine engine 10 may include any number of combustors 16. The flow of combustion gases 20 may be delivered to a turbine 22. The flow of combustion gases 20 may drive the turbine 22 so as to produce mechanical work. The mechanical work produced in the turbine 22 may drive the compressor 12 via a shaft 24 and an external load 26 such as an electrical generator or the like.

The gas turbine engine 10 may use natural gas, fuel oil, various types of syngas, other types of fuels, and/or a combination thereof. In some instances, the gas turbine engine 10 may be any one of a number of different gas turbine engines offered by General Electric Company of Schenectady, New York, including, but not limited to, a series 7 or a 9 heavy duty gas turbine engine or the like. The gas turbine engine 10 may have different configurations and may use other types of components.

Other types of gas turbine engines also may be used herein. Multiple gas turbine engines, other types of turbines, and other types of power generation equipment also may be used herein together.

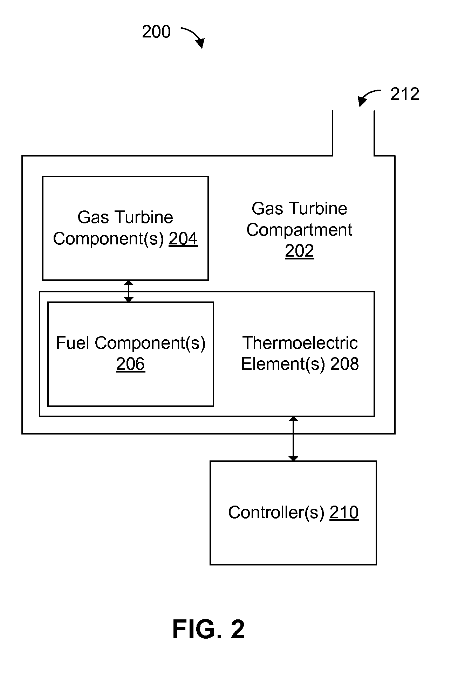

FIG. 2 is a schematic illustrating details of an example system 200 for minimizing coking in a gas turbine engine. The system 200 may include a gas turbine compartment 202, one or more gas turbine components 204, one or more fuel components 206, one or more thermoelectric elements 208, one or more controllers 210, and a ventilation system 212. In certain embodiments, the gas turbine components 204 may include the combustor 16 of FIG. 1, and the fuel components 206 may include the pressurized flow of fuel 18 of FIG. 1 and/or any hardware (e.g., piping, tubing, valves, nozzles, etc.) for supplying fuel to the combustor 16 of FIG. 1.

The gas turbine compartment 202 may wholly or partially enclose the gas turbine components 204, the fuel components 206, and the thermoelectric elements 208. In some instances, the fuel components 206 may include a stagnant liquid fuel (such as fuel oil) disposed therein. That is, the fuel components 206 may include a stagnant liquid fuel therein that is not being used because another fuel source is powering the gas turbine engine. In this manner, the stagnant liquid fuel within the fuel components 206 may be exposed to elevated temperatures within the gas turbine compartment 202. Due to the elevated temperatures within the gas turbine compartment 202, the stagnant liquid fuel within the fuel components 206 may begin to vaporize and/or coke. In order to control the temperature of the stagnant liquid fuel within the fuel components 206 and prevent coking, the thermoelectric elements 208 may be disposed at least partially about the fuel components 206. In this manner, the thermoelectric elements 208 may form a jacket or sleeve about the fuel components 206 so as to regulate the temperature of the fuel components 206 and the stagnant liquid fuel therein. For example, the thermoelectric elements 208 may heat or cool the fuel components 206 and the stagnant liquid fuel therein so as to prevent the stagnant liquid fuel within the fuel components 206 from coking. The ventilation system 212 may facilitate the dissipation of heat transferred between the thermoelectric elements 208 and the fuel components 206. For example, the ventilation system 212 may direct a flow of cooling air towards the thermoelectric elements 208.

In certain embodiments, the thermoelectric elements 208 may be in communication with a controller 210. The controller 210 may be implemented using hardware, software, or a combination thereof for performing the functions described herein. By way of example, the controller 210 may be a processor, an ASIC, a comparator, a differential module, or other hardware means. Likewise, the controller 210 may comprise software or other computer-executable instructions that may be stored in a memory and executable by a processor or other processing means. The controller 210 may be configured to monitor the temperature of the gas turbine compartment 202, the fuel components 206, and the stagnant liquid fuel therein. The controller 210 may also monitor other system temperatures. In this manner, the controller 210 may be in communication with the thermoelectric element 208 so as to control the heating or cooling of the fuel components 206 and the stagnant liquid fuel therein. The heating or cooling of the fuel components 206 and the stagnant liquid fuel therein by the thermoelectric element 208 may prevent the stagnant liquid fuel within the fuel components 206 from coking.

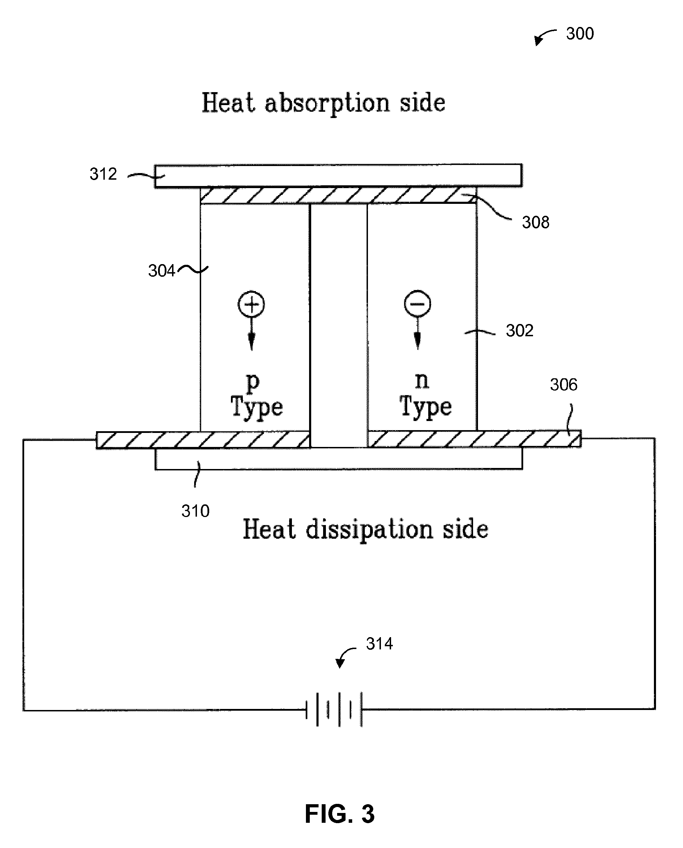

FIG. 3 is a schematic illustrating details of an example thermoelectric element 300 as may be used herein. In certain embodiments, the thermoelectric element 300 may include at least one Peltier element or may include a component employing or otherwise implementing the Peltier effect. For example, the thermoelectric element 300 may include a semiconductor 302 doped with N-type impurity ions and a semiconductor 304 doped with P-type impurity ions. The N-type and P-type doped semiconductors 302 and 304 may be connected together by conductors 306 and 308 to form a serial electronic circuit and a parallel thermal circuit. Heat transfer substrates 310 and 312 may enclose the conductors 306 and 308, respectively. The heat transfer substrates 310 and 312 may be cold sinks or heat sinks depending on the polarity of the thermoelectric element 300.

As is known in Peltier-type thermoelectric elements, the application of a current 314 to the thermoelectric element 300 facilitates localized heating and/or cooling in the junctions and/or conductors as the energy difference in the Peltier-type thermoelectric element becomes converted to heat or cold. Accordingly, the thermoelectric element 300 can be arranged such that heating occurs in one location and cooling in another and vice versa.

The heat transfer substrates 310 and 312 may be a cold sink or a heat sink depending on the polarity of the voltage applied to the thermoelectric element 300. For example, as depicted in FIG. 3, the heat transfer substrate 312 is a cold sink, and the heat transfer substrate 310 is a heat sink. In other embodiments, the heat transfer substrate 312 may be a heat sink, and the heat transfer substrate 310 may be a cold sink.

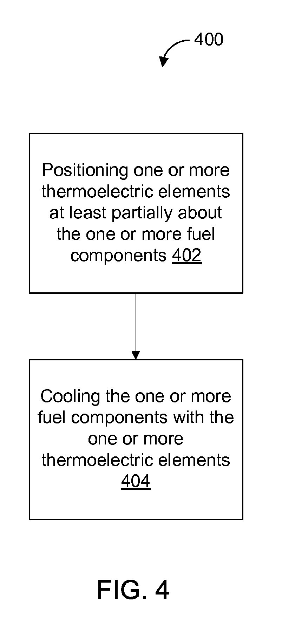

FIG. 4 illustrates an example flow diagram of a method 400 for minimizing coking in gas turbine engines, according to an embodiment. In one example, the illustrative controller 210 of FIG. 2 and/or one or more modules of the illustrative controller 210, alone or in combination, may perform the described operations of the method 400.

In this particular implementation, the method 400 may begin at block 402 of FIG. 4 in which the method 400 may include positioning one or more thermoelectric elements at least partially about the one or more fuel components. The fuel components may include piping, tubing, valves, nozzles, or the like for supplying a fuel (e.g., liquid fuel) to a combustor. In this manner, in certain embodiments, the thermoelectric elements may form a jacket or sleeve about the fuel components.

Block 402 is followed by block 404. At block 404, the method 400 may include cooling the one or more fuel components with the one or more thermoelectric elements. For example, in certain embodiments, the thermoelectric elements may transfer heat with the fuel components so as to regulate the temperature of the fuel components and the stagnant liquid fuel therein. For example, the thermoelectric elements may cool the fuel components and the stagnant liquid fuel therein so as to prevent the stagnant liquid fuel within the fuel components from coking.

Illustrative systems and methods are described for adjusting clearances in a turbine. Some or all of these systems and methods may, but need not, be implemented at least partially by architectures such as those described with the illustrative controller 210 of FIG. 2.

Although embodiments have been described in language specific to structural features and/or methodological acts, it is to be understood that the disclosure is not necessarily limited to the specific features or acts described. Rather, the specific features and acts are disclosed as illustrative forms of implementing the embodiments.

Various aspects and embodiments of the present invention are defined by the following numbered clauses:
1. A system for minimizing coking in gas turbine engines, comprising:
   a gas turbine compartment;
   a fuel component disposed within the gas turbine compartment; and
   a thermoelectric element disposed at least partially about the fuel component, wherein the thermoelectric element exchanges heat with the fuel component.
2. The system of clause 1, wherein the thermoelectric element comprises a Peltier element disposed between a cold sink and a heat sink.
3. The system of any preceding clause, wherein a voltage is applied to the Peltier element to control heat transfer between the cold sink and the heat sink.
4. The system of any preceding clause, wherein the cold sink and the heat sink are dependent on the polarity of the applied voltage to the Peltier element.
5. The system of any preceding clause, wherein the thermoelectric element is in communication with a ventilation system.
6. The system of any preceding clause, wherein the thermoelectric element forms a jacket about at least a portion of the fuel component.
7. The system of any preceding clause, wherein the fuel component is a liquid fuel pipe.
8. The system of any preceding clause, wherein the fuel component is a liquid fuel valve.
9. The system of any preceding clause, wherein the liquid fuel valve is a three-way liquid fuel valve.
10. The system of any preceding clause, further comprising a controller in communication with the thermoelectric element operable to control heat transfer between the thermoelectric element and the fuel component.
11. A system for minimizing coking in gas turbine engines, comprising:
   a gas turbine compartment;
   one or more gas turbine components disposed within the gas turbine compartment;
   one or more fuel components disposed within the gas turbine compartment, the one or more fuel components being in communication with the one or more gas turbine components;
   one or more thermoelectric elements disposed at least partially about the one or more fuel components within the gas turbine compartment; and
   a controller in communication with the one or more thermoelectric elements operable to control heat transfer between the one or more thermoelectric elements and the one or more fuel components.
12. The system of any preceding clause, wherein the one or more thermoelectric elements comprise a Peltier element disposed between a cold sink and a heat sink.
13. The system of any preceding clause, wherein a voltage is applied to the Peltier element to control heat transfer between the cold sink and the heat sink.
14. The system of any preceding clause, wherein the cold sink and the heat sink are dependent on the polarity of the applied voltage to the Peltier element.
15. The system of any preceding clause, wherein the one or more thermoelectric elements are in communication with a ventilation system.
16. The system of any preceding clause, wherein the one or more thermoelectric elements collectively form one or more jackets disposed at least partially about the one or more fuel components.
17. The system of any preceding clause, wherein the one or more fuel components comprise liquid fuel pipes.
18. The system of any preceding clause, wherein the one or more fuel components comprise liquid fuel valves.
19. The system of any preceding clause, wherein the liquid fuel valves are three-way liquid fuel valves.
20. A method for minimizing coking in a gas turbine engine, the gas turbine engine comprising a gas turbine compartment and one or more fuel components disposed within the gas turbine compartment, the method comprising:
   positioning one or more thermoelectric elements at least partially about the one or more fuel components; and
   cooling the one or more fuel components with the one or more thermoelectric elements.

## Claims

1. A system (200) for minimizing coking in gas turbine engines, comprising:
a gas turbine compartment (202);
a fuel component (206) disposed within the gas turbine compartment (202); and
a thermoelectric element (208) disposed at least partially about the fuel component (206), wherein the thermoelectric element (208) exchanges heat with the fuel component (206).

2. The system (200) of claim 1, wherein the thermoelectric element (208) comprises a Peltier element (300) disposed between a cold sink (310) and a heat sink (312).

3. The system (200) of claim 2, wherein a voltage is applied to the Peltier element (300) to control heat transfer between the cold sink (310) and the heat sink (312).

4. The system (200) of claim 3, wherein the cold sink (310) and the heat sink (312) are dependent on the polarity of the applied voltage to the Peltier element (300).

5. The system (200) of any of the preceding claims, wherein the thermoelectric element (208) is in communication with a ventilation system (212).

6. The system (200) of any of the preceding claims, wherein the thermoelectric element (208) forms a jacket about at least a portion of the fuel component (206).

7. The system (200) of any of the preceding claims, wherein the fuel component (206) is a liquid fuel pipe.

8. The system (200) of any of claims 1 to 6, wherein the fuel component (206) is a liquid fuel valve.

9. The system (200) of claim 8, wherein the liquid fuel valve is a three-way liquid fuel valve.

10. The system (200) of any of the preceding claims, further comprising a controller (210) in communication with the thermoelectric element (208) operable to control heat transfer between the thermoelectric element (208) and the fuel component (206).

11. A method (400) for minimizing coking in a gas turbine engine, the gas turbine engine comprising a gas turbine compartment (202) and one or more fuel components (206) disposed within the gas turbine compartment (202), the method comprising:
positioning one or more thermoelectric elements (208) at least partially about the one or more fuel components (206); and
cooling the one or more fuel components (206) with the one or more thermoelectric elements (208).
